# EUROPÄISCHE PATENTSCHRIFT

(11) **EP 1 070 104 B1**
(45) Veröffentlichungstag und Bekanntmachung des Hinweises auf die Patenterteilung: **22.10.2003**
(21) Anmeldenummer: 99911710.4
(22) Anmeldetag: 26.02.1999
(51) Int. Cl.: C09J 7/02, C09J 183/04

(54) **SILIKONHAFTKLEBER MIT VERMINDERTEM KALTEN FLUSS**
SILICONE CONTACT ADHESIVE WITH REDUCED COLD FLOW
ADHESIF DE CONTACT PRESENTANT UN FLUAGE A FROID REDUIT

(30) Priorität: 14.03.1998 DE 19811218
(43) Veröffentlichungstag der Anmeldung: 24.01.2001
(73) Patentinhaber: LTS Lohmann Therapie-Systeme AG, 56626 Andernach (DE)
(72) Erfinder: SCHMITZ, Christoph, D-56598 Rheinbrohl (DE); BRACHT, Stefan, D-56299 Ochtendung (DE)
(74) Vertreter: Flaccus, Rolf-Dieter, Dr.
(86) Internationale Anmeldenummer: EP9901246
(87) Internationale Veröffentlichungsnummer: WO99047619

(56) Entgegenhaltungen:
- EP-A- 0 280 423
- US-A- 5 668 212

## Beschreibung

Die Erfindung betrifft Reagenzien für die Vernetzung von Haftkleberformulierungen auf der Basis von Silikonpolymeren.
Diese Haftkleberformulierungen finden neben anderen technischen Anwendungsmöglichkeiten vor allem Verwendung zur Herstellung medizinischer Pflaster. unter den medizinischen Pflastern eignen sich die neuartig vernetzten Silikonhaftkleber insbesondere zur Herstellung wirkstoffhaltiger medizinischer Pflaster, den transdermalen therapeutischen Systemen (TTS).

Die beschriebenen Vernetzungsreagenzien werden erfindungsgemäß bei der lösemittelhaltigen Beschichtung und Trockung von Silikonhaftkleberformulierungen eingesetzt.
Erst unter diesen Bedingungen entfalten die Reagenzien ihre quervernetzende Wirkung, die zur Ausbildung eines dreidimensionalen polymeren Netzwerkes führt.
Die resultierenden Haftkleberschichten verlieren dadurch ihre Fließfähigkeit, den sogenannten "kalten Fluß".
Der kalte Fluß ist ein unerwünschtes Phänomen, da sich bei seinem Auftreten zwei durch eine Haftkleberschicht verbundene Oberflächen bereits unter dem Einfluß der Schwerkraft gegeneinander verschieben können, so daß ein positionstreuer Verbund dieser Flächen nicht gewährleistet ist.

Im Falle von TTS betrifft diese Problematik insbesondere die Verklebung des Systems mit dem Applikationsort an Mensch oder Tier. Weiterhin kann es schon bei der Lagerung von TTS unter dem Einfluß der Schwerkraft sowie von Kohäsions- und Adhäsionskräften zu einer unerwünschten Verformung oder Verschiebung innerhalb des Systems kommen, wenn in der enthaltenen Silikonkleberschicht kalter Fluß einsetzt.

Es wurde nun überraschend gefunden, daß die zur Vernetzung von Haftklebern auf Polyacrylatbasis verwendeten Vernetzungsreagenzien trotz der grundsätzlich abweichenden Chemie der Silikonpolymere auch bei den letzteren erfolgreich eingesetzt werden können.
Als besonders effektiv haben sich Organo-Metall-Komplexe bestimmter Metallkationen erwiesen. Unter diesen werden erfindungsgemäß bevorzugt Komplexe von Metallen wie Aluminium, Titan, Zirkon oder Zink eingesetzt. Als organischer Komplexbildner eignet sich speziell bei der medizinischen Anwendung Acetylaceton.
Die Vernetzungsreagenzien werden der Lösung des Silikonhaftklebers zugesetzt und entfalten erst nach der Entfernung von Lösungsmitteln bzw. stabilisierenden Zusätzen durch Trocknung ihre quervernetzende Wirkung.

Haftkleber auf der Basis von Silikonpolymeren besitzen besondere Bedeutung in der medizinischen Anwendung. Dies beruht auf ihrer ausgezeichneten Verträglichkeit auf der Haut hinsichtlich Auslösung von Hautreizungen (Irritationen) und Auslösung immunologischer Reaktionen (Sensibilisierung, Allergisierung). Andererseits erweisen sich Silikonhaftkleber auf der menschlichen Haut als zuverlässig und langfristig bis hin zu mehreren Tagen klebende Produkte. Dabei spielt auch der stark wasserabweisende Charakter eine Rolle.
Im Bereich von TTS zeichnen sich Silikonhaftkleber durch ihre hohe chemische Kompatibilität mit pharmazeutischen Wirk- und Hilfsstoffen aus, die die chemische Stabilität und Lagerfähigkeit von Produkten auf dieser Basis fördert. Eine besondere Rolle spielt weiterhin die ungewöhnlich hohe Durchlässigkeit (Diffusibilität) der Silikonpolymere, die die Abgabe von enthaltenen Wirk- und Hilfsstoffen erleichtert.

Neben diesen Vorteilen ist bei den im Markt befindlichen Silikonhaftklebern für die medizinische Anwendung (z.B. Produktserie Bio-PSA Q7 der Dow Corning Company) ein erheblicher Mangel in den rheoloischen Eigenschaften festzustellen.
Es handelt sich um Polymere auf der Basis von Polysiloxan, die keine oder nur eine auf mikroskopische Areale beschränkte dreidimensionale Vernetzung aufweisen. Sie besitzen eine im wesentlichen fädige, nur geringfügig oder gar nicht verzweigte Struktur.
Dies ist erforderlich, um die Produkte in organischen Lösungsmitteln wie z.B. kurzkettigen Alkanen (Heptan, Benzin) oder Ethylacetat überhaupt lösen und einer lösemittelhaltigen Verarbeitung zuführen zu können.

Weiterhin handelt es sich bei diesen Polymeren des Standes der Technik um einkomponentige Polymerlösungen. Einkomponentig heißt, daß die in der Lösung enthaltenen Polymere im Rahmen der Weiterverarbeitung nicht zu einer Zwei-Komponenten-Reaktion im bekannten Sinne von Harz und Härter bestimmt sind.
Einkomponentig heißt dagegen nicht, daß in der Lösung nicht mehrere Typen von Polysiloxanpolymeren, gegebenenfalls auch in Mischung mit chemisch andersartigen Polymeren (z.B. Polyacrylaten) vorliegen können.

Die im folgenden beschriebenen Vorgehensweisen bei der Verarbeitung einkomponentiger Polysiloxan-Haftkleberlösungen sind nicht mit denjenigen Verfahren und Katalysatoren zu verwechseln, die in mannigfaltiger Weise für Zweikomponenten-Silikonkleber beschrieben worden sind. Solche Systeme enthalten mindestens zwei verschiedene Typen von Polysiloxanen, die im Rahmen der Weiterverarbeitung für eine Reaktion zu einem dreidimensionalen polymeren Netzwerk im Sinne von Harz und Härter bestimmt sind.

Der Begriff Polysiloxan umfaßt auch Mischpolymere des Polysiloxans, bei denen in die Polymerkette chemisch andersartige Abschnitte eingebaut oder daran angebaut sind, z.B. auf der Basis von Polyethylenoxid, Polypropylenoxid, Polyvinylpyrrolidon oder Poly(meth)acrylat.

Auf dem Gebiet der TTS-Herstellung umfaßt die Verarbeitung von Polysiloxan-Haftkleberlösungen das Ausstreichen und Trocknen zu dünnen, haftklebenden Polymerfilmen.
Im verarbeiteten Zustand erweist sich die fehlende dreidimensionale Vernetzung als Nachteil, da die fädigen Polymerketten eine, wenn auch extrem langsame, Fließfähigkeit beibehalten. Dies wird in der Fachsprache als "Kalter Fluß" bezeichnet, da er schon bei Raumtemperatur stattfindet. Als Kräfte, die ein solches Fließen antreiben, kommen in Betracht:
1. die Schwerkraft,
2. sämtliche mechanische Kräfte, die auf das Produkt während der Herstellung oder bei der Lagerung einwirken können,
3. Adhäsionskräfte zwischen dem haftklebenden Polymer und den von ihm bedeckten Oberflächen (Kontraktion oder Spreitung als Folge),
4. Kohäsionskräfte im Polymer selbst (Kontraktion).

Der kalte Fluß hat praktisch immer nachteilige Effekte während der Lagerung von TTS, die typischerweise zwei Jahre und mehr betragen kann. Es kann auf diesem Wege z.B. zum Verkleben der Produkte mit ihren Verpackungen kommen.
Auch nach der Applikation auf die menschliche oder tierische Haut macht sich das Phänomen unerwünscht bemerkbar, insbesondere gefördert durch die warme Körpertemperatur. Bei mehrstündiger bis mehrtägiger Tragedauer kann es zu einem Verrutschen durch regelrechtes Fließen des TTS über die Haut kommen. Weiterhin kann der Silikonhaftkleber sich auf der Haut durch langsames Fließen über die ursprünglich beklebte Fläche hinaus ausbreiten. Dies führt nach der Entfernung des Systems häufig zu Rückständen auf der Haut entlang der Randzone des Systems. Diese Rückstände werden vom Benutzer als sehr störend angesehen.

Die Problematik des kalten Flusses bei Silikonhaftklebern ist bekannt. US 5,232,702 beschreibt eine große Anzahl möglicher Gegenmaßnahmen. Es finden sich hier sehr unterschiedliche Füll- und Zuschlagstoffe, unter denen jedoch keiner als Vernetzungsreagenz beschrieben wird. Quervernetzungsreaktionen werden im Zusammenhang mit wirkstoffhaltigen Systemen sogar ausdrücklich als problematisch bzw. unmöglich beschrieben wegen zu hoher erforderlicher Temperaturen oder mangelnder Biokompatibilität der Reagenzien (Spalte 5, Zeilen 3-10).
Stattdessen wird eine große Zahl anderer, die Kohäsion verbessernder Maßnahmen beschrieben.

Da diese Maßnahmen in der Praxis nicht immer eine Beherrschung des Problems ermöglichen, bestand die Aufgabe der Erfindung darin, neuartige und effizientere Methoden zur Unterdrückung des kalten Flusses bei Silikonhaftklebern bereitzustellen.
Diese Aufgabe wird überraschend dadurch gelöst, daß Reagenzien zugefügt werden, die bei einer chemisch völlig anderen Stoffklasse von haftklebenden Polymeren, den Polyacrylaten, zur Unterdrückung des kalten Flusses eingesetzt werden. Diese Übertragbarkeit war nicht zu erwarten, da Polysiloxane als Grundgerüst von Silikonpolymeren eine völlig andere chemische Natur besitzen als die auf reiner Kohlenwasserstoffchemie aufgebauten Polyacrylate.

Bei Polyacrylathaftklebern, die freie Carboxyl- oder Hydroxylgruppen an das Polymer gebunden enthalten, ist die Möglichkeit in der Fachwelt bekannt, durch Zusatz von mehrwertigen Ionen, z.B. von Calcium, Magnesium oder Zink, insbesondere aber von Aluminium und den Elementen der 4. Nebengruppe, Titan, Zirconium und Hafnium, eine dreidimensionale Vernetzung von Polymerketten zu erreichen. Aluminium kommt nur als dreiwertiges Ion vor, bei den Elementen der 4. Nebengruppe wird die stabile Oxidationsstufe +4 eingesetzt.

Auf diesem Wege wird es möglich, das Haufwerk von fädigen Polymerketten erst bei der Trocknung aus einer Lösung heraus in ein nicht mehr fließfähiges dreidimensionales Netzwerk zu überführen.
Um einerseits die Metallionen in zumeist organischen Lösungsmitteln einsetzen zu können und andererseits eine vorzeitige Vernetzungsreaktion in der Polymerlösung zu unterbinden, werden organische, niedermolekulare Komplexeren eingesetzt, an die die Metallionen zunächst gebunden sind. Unter diesen Komplexbildnern nimmt Acetylaceton im medizinischen Bereich eine besondere Stellung ein, da es toxikologisch relativ unkritisch ist und außerdem bei Trocknungsprozessen leicht aus dem Produkt entfernt werden kann. Acetylaceton ist in seiner chemischen Enolform eine vinyloge Säure und bildet mit den Metallionen Komplexe, die entsprechenden Acetylacetonate. Diese Komplexe besitzen eine eigene chemische Natur mit besonderer Stabilität und sind nicht mit herkömmlichen Salzen organischer Säuren mit den betreffenden Metallen vergleichbar.
Aluminium- und Titanylacetylacetonat werden zur Vernetzung von Polyacrylathaftklebern während der Trocknung aus organischen Lösungsmitteln eingesetzt.
Bei der Vernetzung findet ein Übergang der Metallionen vom Komplexor auf die funktionellen Gruppen des Acrylatpolymers statt, wobei mehrere funktionelle Gruppen auf verschiedenen Polymerketten miteinander verknüpft werden.

Für die bei Polyacrylaten sehr häufig gebrauchten Vernetzungsreagenzien Aluminium- und Titanylacetylacetonat wurde nun überraschend gefunden, daß sie trotz der völlig abweichenden Chemie bei Polysiloxanen eine phänomenologisch praktisch gleichartige Wirkung zeigen:
Die Fließfähigkeit von Silikonhaftklebern wird deutlich gemindert.
Die Charakteristik dieser Veränderung bei Polysiloxanen ist derjenigen, wie sie bei Polyacrylaten auftritt, so ähnlich, daß von einer dreidimensionalen Vernetzung über einen im einzelnen nicht bekannten Mechanismus ausgegangen werden kann.

Die neuartige Vernetzung wurde an zwei für die medizinische Anwendung sehr bedeutenden Gruppen von Silikonhaftklebern erprobt. Es handelt sich um Haftkleber auf der Basis von Polydimethylsiloxan einerseits in einer nicht aminkompatiblen Form und andererseits einer aminkompatiblen Form.
Die nicht aminkompatible Form ist dadurch gekennzeichnet, daß bei der Polymerisation ein Rest an Silanolgruppen (an Silizium gebundene Hydroxylgruppen) im Polymer verbleibt. Dies ist der Standardtyp, der über die Silanolgruppen zur unerwünschten Reaktion mit primären, sekundären oder tertiären Amingruppen fähig ist.
Da viele pharmazeutische Wirkstoffe Amingruppen enthalten, stehen speziell für die Verwendung in TTS aminkompatible Typen zur Verfügung. Bei diesen wird ein sog. End-Capping durchgeführt: Die Silanolgruppen werden durch geeignete Reagentien inaktiviert, z.B. durch Anhängung einer Trimethylsilyl-Gruppe.
Als Vergleich diente ein Haftkleber auf der Basis eines Polyacrylates, das einen geringen Anteil freier Carboxylgruppen aufweist. Die dreidimensionale Vernetzbarkeit solcher Acrylate durch die hier zu diskutierenden Vernetzer ist in der Fachwelt allgemein bekannt.

Folgende Formulierungen wurden untersucht:

| | | | | |
|---|---|---|---|---|
| Vernetzer: Al-acetylacetonat [% Al³⁺ (w/w)] | --- | 0,01 | 0,025 | 0,05 |
| Polyacrylathaftkleber Durotak 387-2051 | A11 | A12 | A13 | A14 |
| Silikonhaftkleber Bio-PSA Q7-4602 | S31 | --- | --- | S32 |
| Vernetzer: Tiacetylacetonat [% Ti⁴⁺ (w/w)] | --- | 0,05 | 0,1 | 0,2 |
| Silikonhaftkleber Bio-PSA Q7-4602 | S11 | S12 | S13 | S14 |
| Silikonhaftkleber Bio-PSA Q7-4301 | S21 | S22 | S23 | S24 |

Al=Aluminium; Ti=Titanyl

Die Angaben der Vernetzerkonzentration beziehen sich auf die getrocknete Klebermasse.

Bio-PSA Q7-4602, Hersteller Dow Corning, ist die Lösung eines nicht aminkompatiblen Silikonhaftklebers in Ethylacetat. Das Produkt 4301 unterscheidet sich davon durch die Aminkompatibilität. Das Lösungsmittel ist hier Heptan. Durotak 387-2051, Hersteller National Starch, ist die Lösung eines Polyacrylathaftklebers in einem Gemisch aus Ethylacetat und Heptan ohne Vernetzerzusatz.

Die Herstellung der Klebermassen erfolgte durch Zugabe der entsprechenden Menge einer 2%igen Lösung von Titanylacetylacetonat in Ethanol bzw. einer 4%igen Lösung von Aluminiumacetylacetonat in Ethylacetat zu der Kleberlösung und anschließende Vermischung.

Die viskosen Kleberlösungen wurden mit Hilfe eines geeigneten Filmziehrahmens in dünner Schicht auf eine Polyethylenterephthalat (PET)-Folie (Hostaphan RN 100; Fa. Hoechst) ausgestrichen und 10 Minuten lang in einem Abluftofen bei 80°C getrocknet. Die Schichtdicke wurde bei allen Formulierungen so eingestellt, daß sich ein Flächengewicht des getrockneten Filmes von 60 g/m² ± 5% ergab. Dies entspricht 6 mg/cm² und einer Schichtdicke von etwa 60 µm.

Die Beschichtung auf PET führt bei allen hier getesteten Haftklebern zu einem mechanisch kaum zu lösenden Verbund. Alternativ wurden die Haftkleberfilme bei sonst gleichen Bedingungen auch auf einer durch Beschichtung mit einem fluorierten Polymer abweisend ausgerüsteten Trägerfolie (ScotchPak 1022; Fa. 3M) hergestellt. Unter diesen Bedingungen kann der Haftkleberfilm leicht mechanisch von der Trägerfolie entfernt und weiterverarbeitet werden.

Die Effekte des Vernetzerzusatzes wurden bei den hergestellten Haftkleberschichten mit zwei apparativen Meßmethoden untersucht;

Der "Tack" oder auch die "Tackigkeit" eines Haftklebers beschreibt seine Fähigkeit, auf einer Oberfläche spontan zu verankern. Diese schon nach kürzester Kontaktzeit ohne nennenswerte Andruckkraft auftretende Spontanklebrigkeit hängt wesentlich von der Fließfähigkeit des Haftklebers ab. Eine hohe Fließfähigkeit ermöglicht einen raschen, die Mikrostruktur einer Substratoberfläche vollflächig erfassenden Kontaktschluß, folglich einen hohen Tack. Sie ist nicht die einzige, aber die wichtigste den Tack bestimmte Eigenschaft.
Als Meßverfahren zur Erfassung des Tacks eignet sich die "Rolling Ball"-Methode. Dabei wird eine Kugel aus geeignetem Material mit einer Anfangsgeschwindigkeit versehen und anschließend über den in dünner Schicht auf einem planaren Träger fixierten Haftkleber rollen gelassen.
Es kann entweder die Strecke ausgewertet werden, nach der die Kugel durch die vom Tack abhängige Bremswirkung des Haftklebers zum Stehen kommt, oder es wird die Zeit gemessen, die die Kugel zum Durchlauf einer bestimmten Strecke benötigt, ohne daß sie innerhalb dieser Strecke zum Stehen kommt. Die Ergebnisse der letzteren Variante werden nicht durch den häufig erratischen Verlauf des "Steckenbleibens" der Kugel verzerrt.

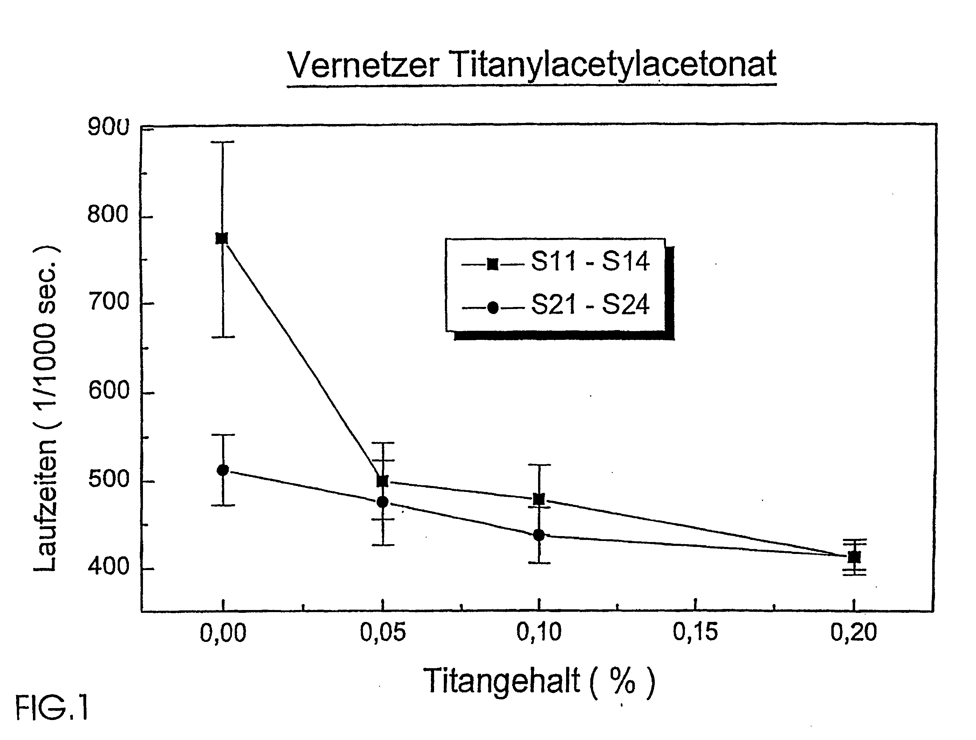

Die Durchlaufzeit der Kugel wurde auf einer schiefen Ebene (Glasplatte mit 1 cm Stärke) mit verstellbarem Neigungswinkel über eine Strecke von 59 cm gemessen. Dazu wurde die Kugel mit einer definierten Vorlaufstrecke von 17,5 cm auf den Haftkleberfilm aufrollen gelassen, der sich seinerseits auf einer PET-Folie fixiert befand.
Die Messung der Durchlaufzeit erfolgte zwischen zwei modulierten Infrarot-Lichtschranken durch einen angeschlossenen elektronischen Timer mit Anzeige von 1/1000 Sekunden.
Bei einem Neigungswinkel von 35° unter Verwendung einer Wälzlagerkugel aus Edelstahl mit einem Durchmesser von 18 mm wurden die in Fig.1 gezeigten Durchlaufzeiten als Mittelwert von jeweils 6 Versuchen gefunden.

Die Messungen zeigen eine mit der Zunahme der Vernetzerkonzentration korrelierte Abnahme der Durchlaufzeit für alle drei Klebertypen. Der Tack nimmt also bei den Silikonhaftklebern durch Vernetzerzusatz in einer Weise ab, wie es aus der Theorie für eine Vernetzung und damit Reduzierung der Fließfähigkeit des Polymers zu erwarten wäre und wie es am bekannten Beispiel der Vernetzung des Polyacrylates in gleicher Weise auch sichtbar wird (A11-A14).
Dies gilt insbesondere für den nicht aminkompatiblen Silikonkleber (S11-S14), eindeutig aber auch für die aminkompatible Variante (S21-S24).

Weiterhin zeigt sich, daß die Vernetzung besonders deutliche Effekte im Konzentrationsbereich bis 0,05% und auch noch zwischen 0,05% und 0,1% Aluminium liefert.

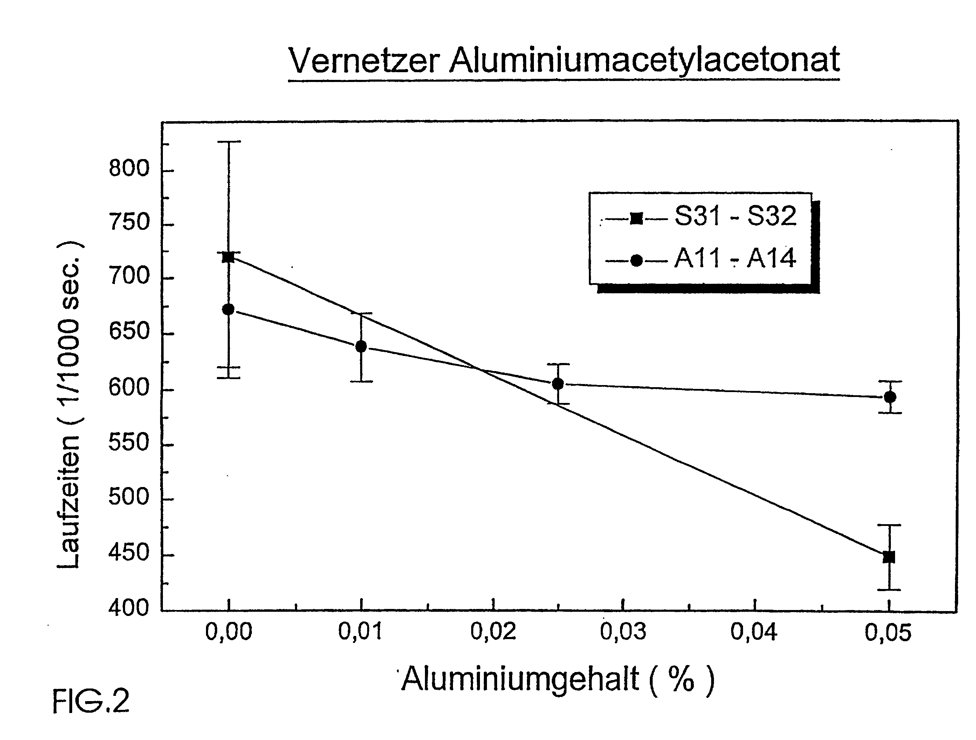

Die Verwendung von Aluminium-basiertem Vernetzer (S31+S32) anstelle von Titan (S11+S12) erweist sich beim Silikonhaftkleber als gleichartig wirksam (Fig.2).

Weiterhin wurde die Scherfestigkeit der hergestellten Haftkleberfilme untersucht.
Bei unvernetzt fädigen, fließfähigen Polymeren tritt unter Anlegen einer Scherkraft ein langsames Fließen des Filmes auf. Solange nicht zu schnell geschert und dadurch der Film abgerissen wird, kann unter einer konstanten Scherkraft eine nahezu konstante Fließgeschwindigkeit beobachtet werden. Bei einer dreidimensionalen Quervernetzung der Polymerketten geht dagegen der viskose Anteil nahezu verloren, und es kann nur noch eine elastische Verformung erfolgen. Bei steigender Scherkraft kommt es schließlich zum mechanischen Zerreißen der Polymerstruktur bis hin zum Zerreißen des gesamtem Filmes.

Für vernetzte und unvernetzte Haftkleberfilme ergeben sich damit sehr unterschiedliche Charakteristiken bezüglich des Verhaltens bei Scherung.

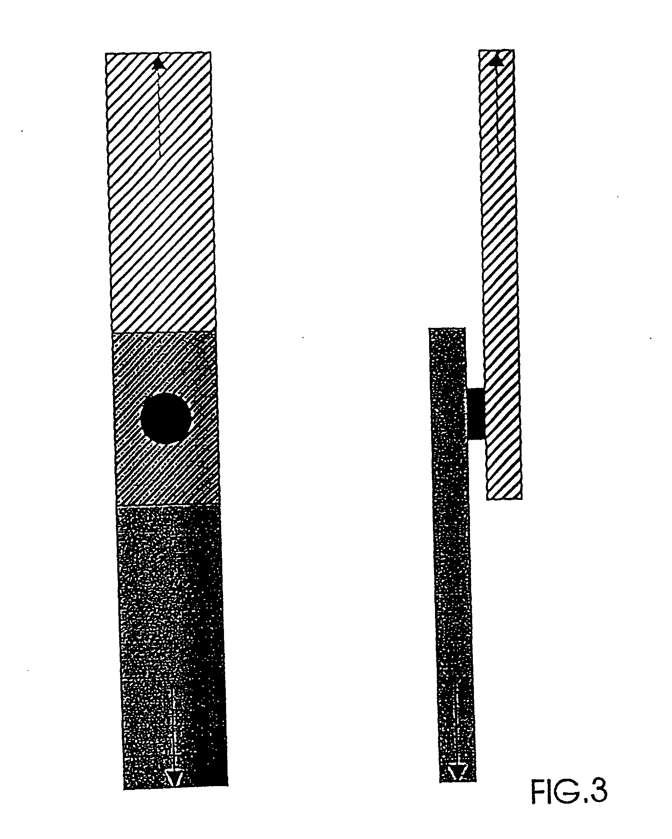

Zur Untersuchung dieses Verhaltens wurden aus den hergestellten Haftkleberfilmen kreisrunde Stanzlinge mit 12 mm Durchmesser entnommen. Diese runden Filmstückchen wurden zwischen 2 Streifen einer PET-Folie (Hostaphan RN 100; Fa. Hoechst) fixiert, gem. Fig.3.
Nach Einspannung dieser Anordnung in eine handelsübliche Zugprüfmaschine (Universalprüfmaschine 81803 der Fa. Frank, Weinheim), wurde diejenige Scherkraft über die Zeit aufgezeichnet, die erforderlich war, um eine konstante Schergeschwindigkeit von 2,5 mm/min zu erzielen.

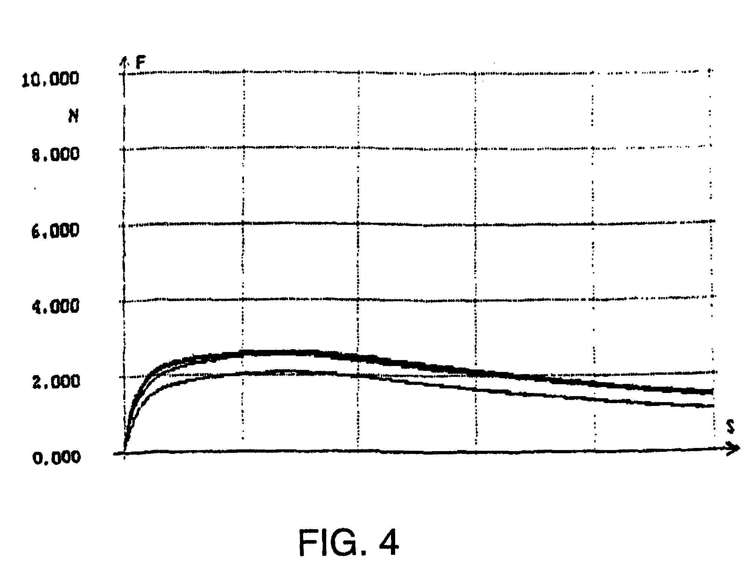

Die erhaltenen Kraft/Zeit-Diagramme bei jeweils 6 Einzelmessungen sind in Fig. 4 bis Fig. 7 wiedergegeben.

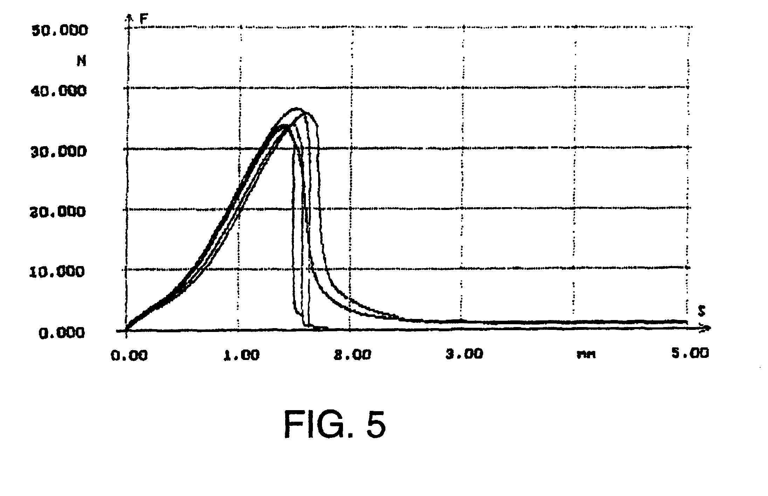

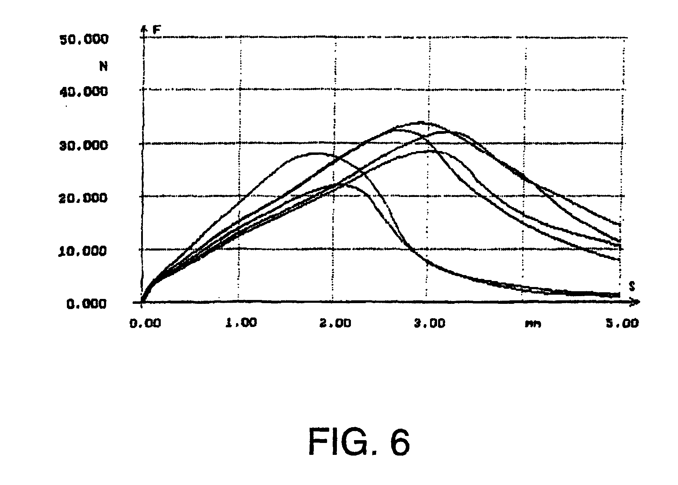

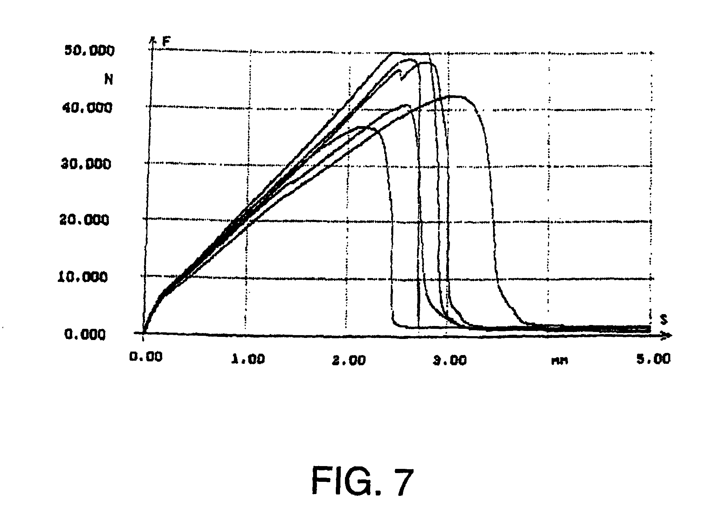

Bei dem als Referenz dienenden Polyacrylat stellt sich im unvernetzten Zustand nach kurzer Zeit eine konstante Scherkraft ein, die für die Aufrechterhaltung der vorgegebenen, konstanten Schergeschwindigkeit aufgewendet werden muß: das Polymer fließt (Fig. 4).
Im vernetzten Zustand kommt es dagegen unter elastischer Verformung zu einem raschen Anstieg der Scherkraft, bis schließlich die elastische Dehnbarkeit des Filmes überschritten wird und der Film zerreißt, wodurch die Scherkraft rasch gegen Null abfällt (Fig. 5).
Der Silikonfilm zeigt ohne Vernetzerzusatz ein dem unvernetzten Polyacrylatfilm sehr ähnliches Verhalten, indem auch hier bei einer bestimmten Scherkraft die vorgegebene Schergeschwindigkeit unter Fließen beibehalten wird. Die nötigen Kräfte bewegen sich lediglich auf einem höheren Niveau, und der "Energieberg" zum Übergang aus der Ruhe in eine Fließbewegung ist deutlicher ausgeprägt als beim unvernetzten Polyacrylat (Fig. 6). Dies könnte mit unterschiedlichen Kettenlängen und unterschiedlichen intermolekularen Wechselwirkungskräften beider Polymertypen in Verbindung stehen.
Entscheidend ist jedoch die charakteristische Veränderung des Verlaufes in einem vernetzerhaltigen Silikonfilm. Sehr ähnlich dem quervernetzten Polyacrylat baut sich nun unter elastischer Verformung eine Scherkraft auf, die schließlich unter Zerreißen des Filmes gegen Null abfällt (Fig. 7). Hierin ist ein deutlicher Beweis dafür zu sehen, daß der Silikonhaftkleberfilm nach Zusatz des Vernetzers Titanylacetylacetonat nicht mehr fließfähig ist.

## Patentansprüche

1. Verfahren zur Herstellung von Polysiloxan-Haftkleberschichten mit vermindertem kalten Fluß durch Beschichtung und Trocknung einer einkomponentigen Polysiloxan-Haftkleberlösung auf einer geeigneten flächigen Unterlage, **dadurch gekennzeichnet, daß** der zu beschichtenden organischen Kleberlösung ein Komplex aus einem Metallion aus der Gruppe von Calcium, Magnesium, Zink, Aluminium, Titan, Zirconium oder Hafnium mit einem niedermolekularen organischen Komplexbildner zugesetzt wird, wobei das Metallion erst unter den Bedingungen der Erhitzung und/oder Trocknung der Kleberlösung aus der Bindung an den Komplexbildner frei wird.

2. Verfahren nach Anspruch 1, **dadurch gekennzeichnet, daß** der Metallzusatz mindestens 0,005 Gew.%, bezogen auf die getrocknete Klebermasse, beträgt.

3. Verfahren nach Anspruch 1, **dadurch gekennzeichnet, daß** das Metall in einer Menge von 0,005 bis 0,5 Gew.%, bezogen auf die getrocknete Klebermasse, eingesetzt wird.

4. Verfahren nach einem oder mehreren der vorangehenden Ansprüche, **dadurch gekennzeichnet, daß** der organische Komplexbildner bei der Trocknung im wesentlichen entfernt wird.

5. Verfahren nach einem oder mehreren der vorangehenden Ansprüche, **dadurch gekennzeichnet, daß** die Trocknung bei einer Temperatur zwischen 20 und 120°C erfolgt.

6. Verfahren nach einem oder mehreren der vorangehenden Ansprüche, **dadurch gekennzeichnet, daß** das Flächengewicht des getrockneten Filmes zwischen 10 und 300 g/m² beträgt.

7. Verfahren nach einem oder mehreren der vorangehenden Ansprüche, **dadurch gekennzeichnet, daß** der organische Komplexbildner Acetylaceton ist oder daß Acetylaceton an der Komplexbildung beteiligt ist.

8. Verfahren nach einem oder mehreren der vorangehenden Ansprüche, **dadurch gekennzeichnet, daß** das an dem Komplex beteiligte Metall Aluminium oder Titan ist.

9. Verfahren nach einem oder mehreren der vorangehenden Ansprüche, **dadurch gekennzeichnet, daß** es sich bei dem Polysiloxan im wesentlichen um Polydimethylsiloxan handelt.

10. Verfahren nach Anspruch 9, **dadurch gekennzeichnet, daß** die im Polydimethylsiloxan vorhandenen freien SilanolGruppen durch ein geeignetes End-Capping chemisch inaktiviert und damit aminresistent ausgebildet sind.

11. Medizinisches Pflaster, **dadurch gekennzeichnet, daß** es in seinem schichtförmigen Aufbau mindestens eine Schicht eines Polysiloxan-Haftklebers aufweist, die nach einem Verfahren gemäß einem der vorangehenden Ansprüche hergestellt wurde.

## Claims

1. Process for the production of polysiloxane pressure-sensitive adhesive layers with reduced cold flow by means of coating and drying a one-component polysiloxane pressure-sensitive adhesive solution onto a suitable flat-shaped carrier, **characterized in that** a complex of a metal ion of the group consisting of calcium, magnesium, zinc, aluminum, titanium, zirconium or hafnium with a low-molecular organic complex former is added to the organic adhesive solution to be coated, whereby the metal ion is only released from the bond to the complex former under the conditions of heating and/or drying of the adhesive solution.

2. Process according to claim 1, **characterized in that** the metal additive amounts to at least 0.005 wt-%, relative to the dried adhesive mass.

3. Process according to claim 1, **characterized in that** the metal is provided in an amount of 0.005 to 0.5 wt-%, relative to the dried adhesive mass.

4. Process according to one or more of the preceding claims, **characterized in that** the organic complex former is substantially removed during drying.

5. Process according to one or more of the preceding claims, **characterized in that** the drying is carried out at a temperature of between 20 and 120°C.

6. Process according to one or more of the preceding claims, **characterized in that** the weight per unit area of the dried film is between 10 and 300 g/m².

7. Process according to one or more of the preceding claims, **characterized in that** the organic complex former is acetylacetone or that acetylacetone participates in the complex forming.

8. Process according to one or more of the preceding claims, **characterized in that** the metal participating in the complex is aluminum or titanium.

9. Process according to one or more of the preceding claims, **characterized in that** the polysiloxane is substantially polydimethyl siloxane.

10. Process according to claim 9, **characterized in that** the free silanol groups present in the polydimethyl siloxane are chemically deactivated through a suitable endcapping and are thus amine-resistant.

11. Medicinal patch, **characterized in that** in its layered structure it has at least one layer of a polysiloxane pressure-sensitive adhesive produced by means of a process according to one of the preceding claims.

## Revendications

1. Procédé de préparation de couches adhésives de contact en polysiloxane, présentant un fluage à froid réduit, par application et séchage d'une solution d'adhésif de contact en polysiloxane à un composant sur un support plat approprié, **caractérisé en ce que** dans la solution d'adhésif organique à appliquer, on introduit un complexe d'un ion métallique appartenant au groupe du calcium, du magnésium, du zinc, de l'aluminium, du titane, du zirconium ou de l'hafnium, avec un agent complexant organique de faible poids moléculaire, l'ion métallique n'étant libéré par l'agent complexant que dans les conditions où s'effectuent le chauffage et/ou le séchage de la solution d'adhésif.

2. Procédé selon la revendication 1, **caractérisé en ce que** la quantité de métal ajouté est d'au moins 0,005 % en poids par rapport à la masse d'adhésif sèche.

3. Procédé selon la revendication 1, **caractérisé en ce que** la quantité de métal ajouté est de 0,005 à 0,5 % en poids par rapport à la masse d'adhésif sèche.

4. Procédé selon l'une ou plusieurs des revendications précédentes, **caractérisé en ce que** le complexant organique est éliminé essentiellement lors du séchage.

5. Procédé selon l'une ou plusieurs des revendications précédentes, **caractérisé en ce que** le séchage est réalisé à une température comprise entre 20 et 120°C.

6. Procédé selon l'une ou plusieurs des revendications précédentes, **caractérisé en ce que** le poids spécifique du film sec est compris entre 10 et 300 g/m².

7. Procédé selon l'une ou plusieurs des revendications précédentes, **caractérisé en ce que** le complexant organique est l'acétylacétone ou **en ce que** l'acétylacétone prend part à la formation du complexe.

8. Procédé selon l'une ou plusieurs des revendications précédentes, **caractérisé en ce que** le métal qui prend part à la formation du complexe est l'aluminium ou le titane.

9. Procédé selon l'une ou plusieurs des revendications précédentes, **caractérisé en ce que** le polysiloxane est essentiellement le polydiméthylsiloxane.

10. Procédé selon la revendication 9, **caractérisé en ce que** les groupes silanol libres présents dans le polydiméthylsiloxane sont inactivés chimiquement par un coiffage en bout de chaîne et de ce fait, sont résistants aux amines.

11. Emplâtre médical **caractérisé en ce que** dans sa structure en couches, il comprend au moins une couche d'un adhésif de contact en polysiloxane, qui a été préparée conformément au procédé selon l'une quelconque des revendications précédentes.
